# EUROPEAN PATENT APPLICATION

(11) **EP 1 049 343 A1**
(43) Date of publication of application: **02.11.2000**
(21) Application number: 99303278.8
(22) Date of filing: 27.04.1999
(51) Int. Cl.: H04Q 7/30

(54) **Base station equipment for a mobile cellular telecommunications network**

(71) Applicant: LUCENT TECHNOLOGIES INC., Murray Hill, New Jersey 07974-0636 (US)
(72) Inventor: Bestwick, Graham Spencer, Lambourn, Berks. RG17 8Y2 (GB); Gates, William George, Wolverhampton MK12 SDX (GB); Kerslake, Simon John, Stroud, Gloucestershire GL6 8BB (GB); Sudera, Suresh Kumar, Pinner, Middlesex HA5 3SJ (GB); Thompson, Brian John, Reading, Berks. RG2 8QR (GB)
(74) Representative: Williams, David John

(57) **Abstract**

Base station equipment is proposed in which a single radio unit containing all the transmitter, receiver, control and processing facilities, is supplied with power and connected via a data link to a switching centre. One pair of transmission lines, for example, can have sufficient capacity to service two or more units and it is proposed to site a plurality of such units together.

The nearest mains electricity supply is commonly some distance from the base station and running the supply to a radio unit involves significant cost. The cost would be multiplied by the proposed plurality of radio units.

There is disclosed base station equipment, comprising a plurality of radio units each of which contains transmitter, receiver, control and processing facilities, is supplied with mains power, and connected via a data link to a switching centre. A link unit is connected by a single cable to receive power from a mains electrical supply and to supply power to a power supply of each of the radio units via respective cables.

## Description

This invention relates to base station equipment for a mobile cellular telecommunications network.

Base station equipment is proposed in which a single radio unit containing all the transmitter, receiver, control and processing facilities, is supplied with power and connected via a data link to a switching centre. One pair of transmission lines, for example, can have sufficient capacity to service two or more units and it is proposed to site a plurality of such units together.

The nearest mains electricity supply is commonly some distance from the base station and running the supply to a radio unit involves siginificant cost. The cost would be multiplied by the proposed plurality of radio units.

Against this background, there is provided base station equipment, comprising a plurality of radio units each of which contains transmitter, receiver, control and processing facilities, is supplied with mains power, and connected via a data link to a switching centre, a link unit being connected by a single cable to receive power from a mains electrical supply and to supply power to a power supply of each of the radio units via respective cables.

Only one cable has to be installed between the mains supply and the link unit leading to a saving in cost.

Preferably, the link unit has a connection to ground and supplies a ground connection to each of the radio units

Preferably, the link unit is connected by a data link to a telecommunications switching centre, and each radio unit has a first data port for connection via a first data transmission line to the link unit and a second data port for connection via a second data transmission line to a second radio unit, said ports being interconnected so that data can be transferred between the other radio unit and the switching centre.

Embodiments of the invention will now be described, by way of example, with reference to the accompanying drawings, in which:
Figure 1 is a cross section through a radio unit of base station equipment embodying the invention;
Figure 2 is a schematic circuit diagram of a link unit and three radio units in base station equipment embodying the invention;
Figure 3a shows one arrangement of a part of the circuit of Figure 2 in more detail; and
Figure 3b shows another arrangment of the part of the circuit shown in Figure 3a.

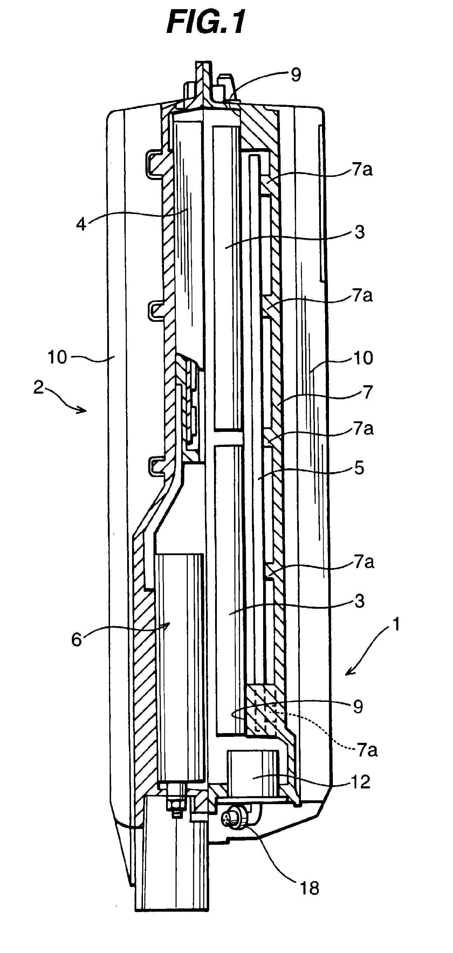

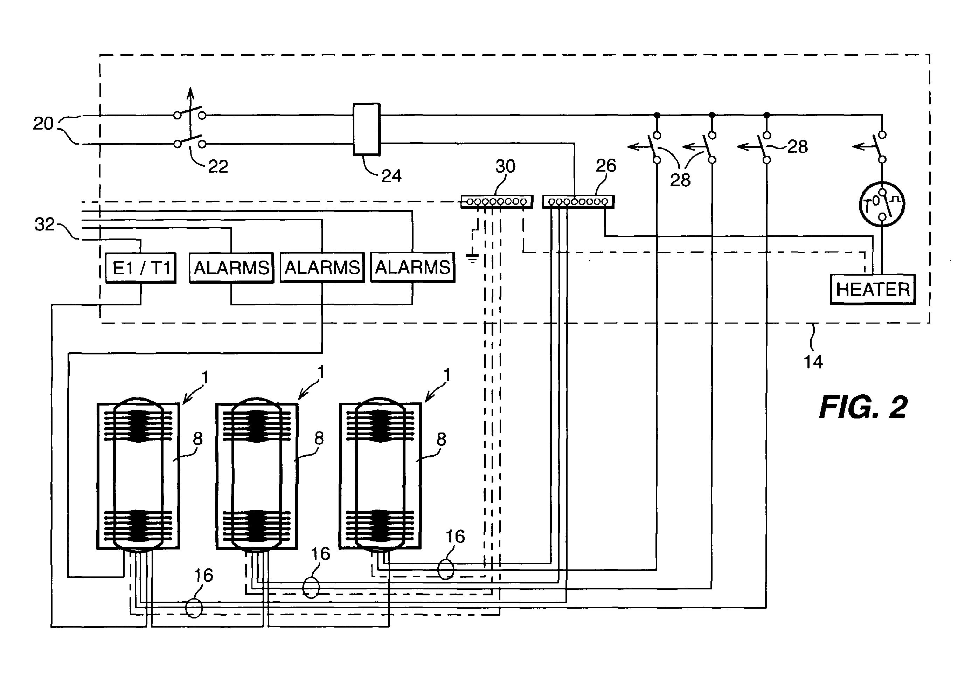

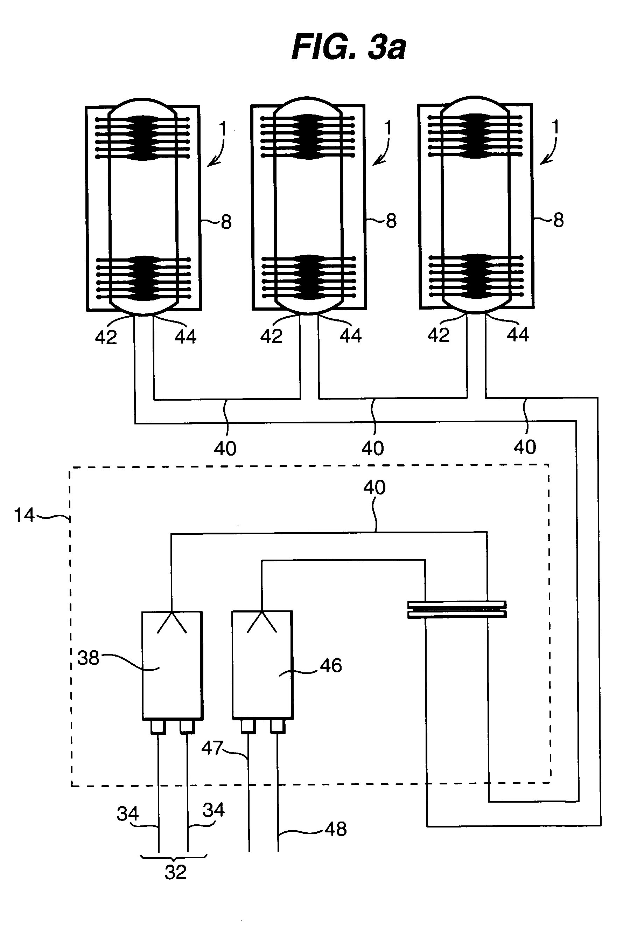

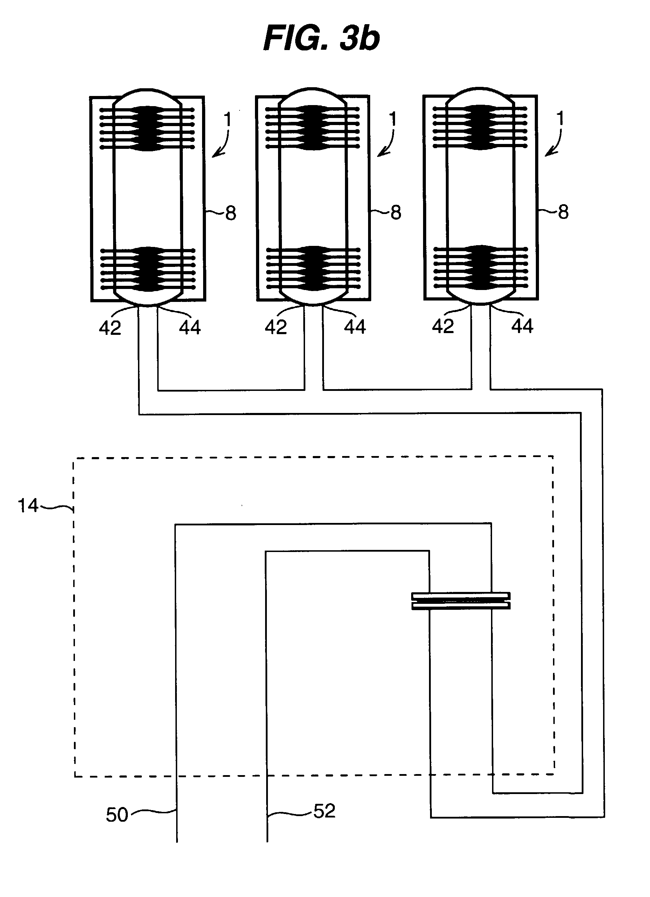

Referring to the drawings, a base station for a cellular mobile telecommunications network comprises a plurality of radio units 1 such as that shown in Figure 1. The radio unit comprises, electronic equipment contained by an external enclosure 2. For use, outside, electronic units such as RF screened transmitter receivers 3, RF screened power amplifiers 4, a processor board 5 (mounting components not shown) and duplexers 6 are environmentally sealed within the enclosure 2. The processor board 5 is mounted on protuberances 7a from a wall 7 of the external enclosure. The transmitter/receivers 3 are mounted by protuberances 9 over the processor board 5. Two transmitter receivers 3 are mounted side by side in the enclosure 2 so that only one is visible in Figure 1. Similarly, two duplexers 6 are mounted side by side so that only one is visible in Figure 1. The enclosure 2 is conatined by a case 8 shown in Figures 2 and 3, and cooled by air circulating between the enclosure 2 and the case 8 and to this end is provided with fins 10 or extended surfaces of which only two are visible in Figure 1.

A power supply unit 12 provides DC to the units in the enclosure 2. The power supply unit receives mains power from a link unit 14, shown in Figures 2 and 3, via a cable 16 connected to a connector 18. The link unit 14 is supplied with power from a distant mains supply via input lines 20 L and N. The supply is fed through a manually operated circuit breaker 22 and a residual current circuit breaker 24, neutral going to a neutral bar 26, and the live side to three secondary circuit breakers 28. An earth connection is provided to an earth bar 30. Mains cables from the connector 18 on each of the radio units terminat on the earth bar, the neutral bar and a respective one of the secondary circuit breakers 28. Each radio unit can be isloated separately by its secondary circuit breaker 28, or all three can be isloated together by the circuit breaker 22.

The link unit 14 is also connected via an ABIS data link 32 for EI/TI standard 2Mb/s or 1.5 Mb/s data communications to a switching centre. In one arrangement shown in Figure 3a, a two way data link to a switching centre is provided by one or two 75 ohm coax cables 34 one for transmit and one for receive. An impedance converter 38 matches the 75 ohm impedance of each coax cable to that of a respective 120 ohm twisted pair in a cable 40.

Three radio units 1 are daisy chained together by cables 40. Each radio unit 1 has a first data port 42 for connection via a cable 40 to the converter 36 and has a second data port for connection via a second cable 40 to a second radio unit. The ports 40 and 42 are interconnected internally so that data can be transferred between the other radio unit and the switching centre.

The last unit in the daisy chain either has a terminating impedance (not shown) matching that of the cable attached to its port 42, or that is connected by a cable 40 to another impedance converter 46 which converts the 120 ohm impedances of the two twisted pairs in the cable 40 to match the 75 ohm impedance of transmit and receive coax cables 47 and 48 connected to another link unit of another set of radio units.

In an alternative shown in Figure 3b, the impedance converters 38 and 46 are unnecessary because the coax cables are replaced by cables 50 and 52 each containing transmit and receive 75 ohm twisted pairs.

## Claims

1. Base station equipment, comprising a plurality of radio units each of which contains transmitter, receiver, control and processing facilities, is supplied with mains power, and connected via a data link to a switching centre, a link unit being connected by a single cable to receive power from a mains electrical supply and to supply power to a power supply of each of the radio units via respective cables.

2. Base station equipment as claimed in claim 1, wherein the link unit has a connection to ground and supplies a ground connection to each of the radio units.

3. Base station equipment as claimed in any preceding claim, wherein the link unit is connected by a data link to a telecommunications switching centre, and each radio unit has a first data port for connection via a first data transmission line to the link unit and a second data port for connection via a second data transmission line to a second radio unit, said ports being interconnected so that data can be transferred between the other radio unit and the switching centre.
